# EUROPEAN PATENT SPECIFICATION

(11) **EP 3 514 354 B1**
(45) Date of publication and mention of the grant of the patent: **10.03.2021**
(21) Application number: 19151338.1
(22) Date of filing: 11.01.2019
(51) Int. Cl.: F02D 41/00, F02B 37/22, F02B 37/24, F04D 27/02, F02B 37/12

(54) **BOOST PRESSURE CONTROL METHOD AND BOOST PRESSURE CONTROL DEVICE**
LADEDRUCKREGELUNGSVERFAHREN UND LADEDRUCKREGELUNGSVORRICHTUNG
PROCÉDÉ ET DISPOSITIF DE COMMANDE DE PRESSION DE SURALIMENTATION

(30) Priority: 17.01.2018 JP 2018005928
(43) Date of publication of application: 24.07.2019
(73) Proprietor: Bosch Corporation, Tokyo 150-8360 (JP)
(72) Inventor: Goto, Junji, Saitama, 3558603 (JP); Makino, Hajime, Saitama, 3558603 (JP)
(74) Representative: Bee, Joachim

(56) References cited:
- EP-A2- 2 009 264
- DE-A1-102008 014 681
- FR-A1- 2 995 356
- FR-A1- 3 046 815
- US-A1- 2007 214 787
- US-A1- 2012 226 432

## Description

### BACKGROUND OF THE INVENTION

### 1. Field of the Invention

The present invention relates to a boost pressure control method and a boost pressure control device for a supercharger of an internal combustion engine mounted on a vehicle and, in particular to, a boost pressure control method and a boost pressure control device aiming to improve stabilization and reliability of boost pressure control during deceleration, and the like.

### 2. Description of the Background Art

As being effective means for emission control and the like, it has conventionally been well-known to use a supercharger that supercharges intake air to the internal combustion engine.

As such a supercharger, for example, a component referred to as a turbocharger, and the like have been proposed and in practical use. In the turbocharger, a turbine rotates by using exhaust gas, a compressor that compresses the air is driven by a rotating force of the turbine, and the compressed air is forced into the internal combustion engine.

By the way, in an automobile that uses such a supercharger, a phenomenon called compressor surge possibly occurs by a rapid reduction in an air amount suctioned into the compressor during deceleration of the vehicle, which results in abnormal noise, vibrations, and the like.

Various measures against such compressor surge have conventionally been proposed and taken.

For example, the following method and the like have conventionally and widely been known. In the method, presence or absence of occurrence of the compressor surge during the deceleration of the vehicle is detected. In the case where the occurrence of the compressor surge is detected, a turbine opening degree is changed to a surge prevention opening degree that differs from an opening degree in a normal time, so as to prevent the compressor surge (for example, see WO 2013/179935 and the like).
The document US 2012/0226432 A1 discloses a method for controlling boost pressure with the aid of turbochargers in a vehicle. Adjustments to the turbocharger compressor flow are made to limit the possibility of compressor surge by determining/calculating controlling parameters of a rotary member positions of the turbochargers. Calculations allow cylinder mass flow adjustments to be made to equalize flow between compressors during varying operation conditions.

### SUMMARY OF THE INVENTION

However, in the above-described conventional supercharger, the surge prevention opening degree, which is set to prevent the compressor surge, is not always set to an appropriate value corresponding to an operating condition of the vehicle.

More specifically, as the surge prevention opening degree that is set to avoid the occurrence of the compressor surge, a specified opening degree that is determined in advance as a favorable value on the basis of a test result, a simulation result, or the like, or an opening degree selected from a map from which the surge prevention opening degree suited for input parameters such as an engine speed and a fuel injection amount can be read is used.

However, it is unrealistic and difficult to prepare the plural opening degrees corresponding to every conceivable operating condition of the vehicle or the map corresponding to every conceivable operating condition of the vehicle. Thus, the specified opening degree or the map with a possibility of relatively high adaptability is used.

For this reason, depending on the case, the turbine opening degree that is set at the surge prevention opening degree rather rapidly reduces a flow rate of the exhaust gas into the turbine, which reduces exhaust energy supplied to the turbine and generates a reverse flow of the air in the compressor. As a result, the unintended abnormal noise and vibrations are possibly generated. Thus, the optimum prevention of the compressor surge is not necessarily always secured.

The present invention has been made in view of the above circumstance and therefore provides a boost pressure control method and a boost pressure control device capable of setting a turbine opening degree, at which occurrence of compressor surge can be prevented in accordance with an operating condition of a vehicle, and thus capable of realizing highly stable and highly reliable boost pressure control.

In order to achieve the above purpose of the present invention, a boost pressure control method according to the present invention is a boost pressure control method for a supercharger that drives a turbine by exhaust gas flowing through an exhaust passage of an internal combustion engine and supercharges air flowing through an intake passage to the internal combustion engine by a compressor coupled to the turbine, and
in the case where it is determined that the internal combustion engine is in an operation region to operate the compressor in a surge region,
the boost pressure control method:
calculates a target turbine opening area of the turbine for preventing compressor surge by using an arithmetic expression that is acquired by replacing the turbine with a physical model based on a throttle expression, by
setting a target pressure ratio in accordance with an actual boost pressure and calculating a target turbine pressure from said target pressure ratio and the actual boost pressure, the target pressure ratio being a ratio of a pressure on an inlet side of the turbine to the actual boost pressure and being set to prevent the occurrence of the compressor surge, and by using the target turbine pressure as a desired turbine pressure on the inlet side of the turbine so as to calculate the target turbine opening area; and
set an opening of the turbine at an opening degree that corresponds to the target turbine opening area, so as to be able to prevent occurrence of the compressor surge in the compressor.

In addition, in order to achieve the above purpose of the present invention, a boost pressure control device according to the present invention is a boost pressure control device including an electronic control unit configured to control a boost pressure of an internal combustion engine, the boost pressure being generated by a supercharger that drives a turbine by exhaust gas flowing through an exhaust passage of the internal combustion engine and supercharges air flowing through an intake passage to the internal combustion engine by a compressor coupled to the turbine, in which
the electronic control unit is configured to:
calculate a target turbine opening area of the turbine for preventing compressor surge by using an arithmetic expression that is acquired by replacing the turbine with a physical model based on a throttle expression; by
setting a target pressure ratio in accordance with an actual boost pressure and calculating a target turbine pressure from said target pressure ratio and the actual boost pressure, the target pressure ratio being a ratio of a pressure on an inlet side of the turbine to the actual boost pressure and being set to prevent occurrence of the compressor surge; and by using the target turbine pressure as a desired turbine pressure on the inlet side of the turbine so as to calculate the target turbine opening area; and
be able to set an opening of the turbine at an opening degree that corresponds to the target turbine opening area
in the case where it is determined that the internal combustion engine is in an operation region to operate the compressor in a surge region.

According to the present invention, it is configured that the opening of the turbine is set at the opening degree that corresponds to the target turbine opening area calculated by the arithmetic expression based on the physical model in the case where the compressor surge possibly occurs. In this way, the appropriate turbine opening degree can be set in accordance with an operating state of the vehicle on a moment-to-moment basis. Therefore, highly stable and highly reliable boost pressure control can be realized.

In addition, differing from the conventional boost pressure control using the map, tasks such as acquisition and setting of an enormous volume of data required for creation of the map are unnecessary. Thus, such an effect can be exerted that, while cost of the device is reduced, the occurrence of the compressor surge can reliably be prevented even in a range that is difficult to be covered by the conventional boost pressure control using the map.

### BRIEF DESCRIPTION OF THE DRAWINGS

Fig. 1 is a diagram of a configuration example of a boost pressure control device in an embodiment of the present invention.
Fig. 2 is a subroutine flowchart of a procedure of boost pressure control processing that is executed by an electronic control unit used for the boost pressure control device in the embodiment of the present invention.
Fig. 3 is a schematic view for illustrating a physical model of a variable turbine in the embodiment of the present invention.
Fig. 4 includes timing charts for illustrating a change characteristic of a boost pressure in boost pressure control in the embodiment of the present invention, in which Fig. 4A is a timing chart illustrating a change in an accelerator pedal position, Fig. 4B is a timing chart illustrating a change in the boost pressure, Fig. 4C is a timing chart illustrating a change in a turbine opening degree, and Fig. 4D is a timing chart illustrating a change in a surge signal.
Fig. 5 includes timing charts for illustrating a change characteristic of the boost pressure in conventional boost pressure control, in which Fig. 5A is a timing chart illustrating a change in the accelerator pedal position, Fig. 5B is a timing chart illustrating a change in the boost pressure, Fig. 5C is a timing chart illustrating a change in the turbine opening degree, and Fig. 5D is a timing chart illustrating a change in the surge signal.

### DETAILED DESCRIPTION OF THE INVENTION

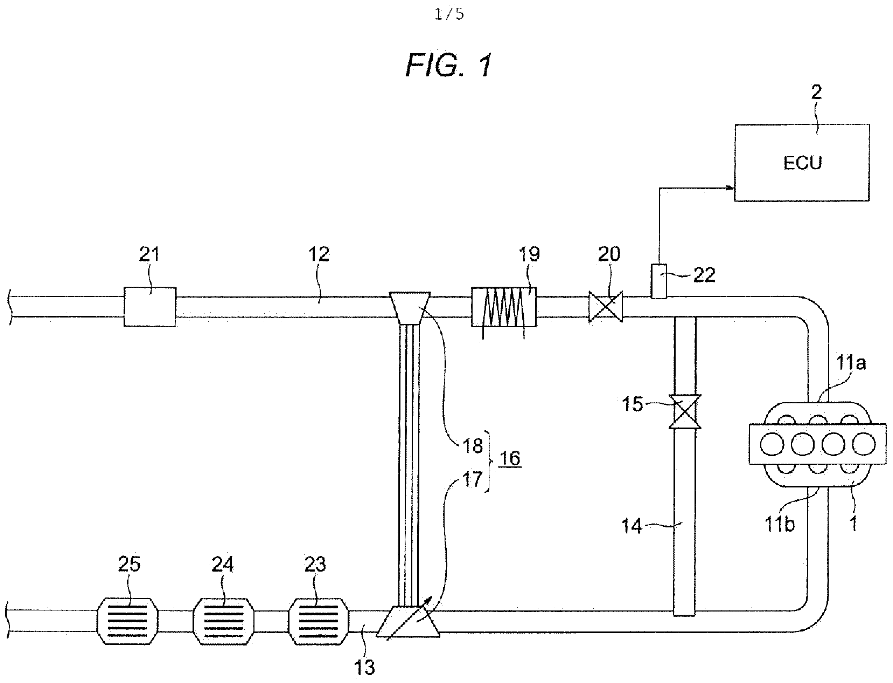

A description will hereinafter be made on an embodiment of the present invention with reference to Fig. 1 to Fig. 4.

Note that members, arrangement, and the like, which will be described below, do not limit the present invention and various modifications can be made thereto within the scope of the present invention.

First, a description will be made on a configuration example of a boost pressure control device in the embodiment of the present invention with reference to Fig. 1.

The boost pressure control device in the embodiment of the present invention can be applied to any types of internal combustion engines including a diesel engine and a gasoline engine.

The boost pressure control device in the embodiment of the present invention is configured that an electronic control unit 2 can control a supercharging operation by a supercharger 16 that is provided to reduce emissions of an engine 1 as the internal combustion engine, and the like.

Hereinafter, a specific configuration of the boost pressure control device will be described.

An intake pipe 12 through which air required to burn fuel is suctioned is connected to an intake manifold 11a of the engine 1. An exhaust pipe 13 through which burned gas is discharged is connected to an exhaust manifold 11b of the engine 1.

A communication passage 14 that communicates between the exhaust pipe (an exhaust passage) 13 and the intake pipe (an intake passage) 12 is provided at appropriate positions in the exhaust pipe 13 and the intake pipe 12. In an intermediate portion of this communication passage 14, an EGR valve 15 is disposed to regulate a communication state of the communication passage 14, in other words, a recirculation amount of the exhaust gas.

In addition, the supercharger 16 is provided. The supercharger 16 has a known/well-known configuration that includes, as primary components: a variable turbine 17 provided on a downstream side of the communication passage 14 in the exhaust pipe 13; and a compressor 18 provided on an upstream side of the communication passage 14 in the intake pipe 12 and coupled to a rotary shaft of the variable turbine 17.

The variable turbine 17 acquires a rotating force from an exhaust flow and uses the rotating force to cause rotation of the compressor 18. In the compressor 18, the intake air is compressed, and the compressed air is supercharged to the intake manifold 11a.

An intercooler 19 that cools the intake air is provided at an appropriate position between the communication passage 14 described above and the supercharger 16 in the intake pipe 12.

An intake throttle valve 20 that regulates an intake air amount is provided at a position between this intercooler 19 and the communication passage 14.

An airflow sensor 21 that measures the intake air amount is provided in an upstream portion of the intake pipe 12.

A boost pressure sensor 22 that detects a boost pressure is provided on a downstream side of the intake throttle valve 20 in the intake pipe 12.

Meanwhile, exhaust aftertreatment devices such as a NOx storage-reduction catalyst 23, a diesel particulate filter (DPF) 24, and a selective catalytic reduction (SCR) 25 for purifying the exhaust gas are provided on a downstream side of the variable turbine 17 in the exhaust pipe 13.

The electronic control unit 2 controls operations of the EGR valve 15, the variable turbine 17, and the intake throttle valve 20 described above.

Such an electronic control unit 2 is configured to include, as primary components: a microcomputer that has a known/well-known configuration as a central component; storage elements (not illustrated) such as RAM and ROM; and an input/output interface circuit (not illustrated), for example.

This electronic control unit 2 receives, in addition to detection signals of the airflow sensor 21 and the boost pressure sensor 22 described above, various signals that are detected by unillustrated sensors and are required for operation control of a vehicle. The various signals include an atmospheric pressure, an engine speed, an accelerator pedal position, an engine coolant temperature, and the like, for example.

The various detection signals that are received by the electronic control unit 2 as described above are used for engine operation control, boost pressure control processing in the embodiment of the present invention, which will be described below, and the like.

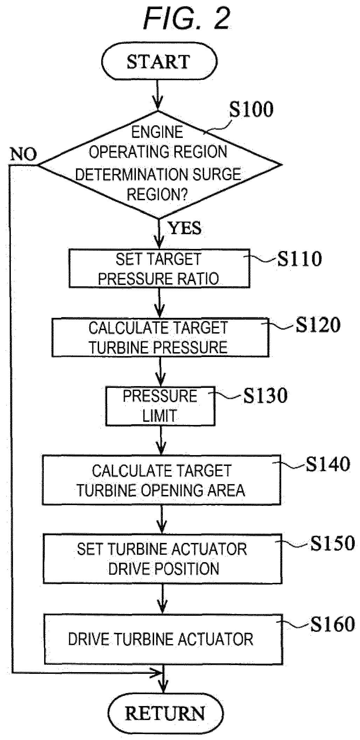

Next, a description will be made on the boost pressure control processing in the embodiment of the present invention that is executed by the electronic control unit 2 with reference to Fig. 2 to Fig. 5.

First, a description will be made on the generality of a boost pressure control method in the embodiment of the present invention.

In the boost pressure control method in the embodiment of the present invention, when the engine 1 is brought into such an operating condition to operate the compressor 18 in a surge region, an opening of the variable turbine 17 is set at an opening degree that corresponds to a target surge opening area (a surge prevention opening degree) so as to reliably prevent occurrence of compressor surge. The target surge opening area is calculated by an arithmetic expression that is acquired by physically modeling the variable turbine 17 on the basis of a throttle expression.

A specific description will hereinafter be made on the boost pressure control method. When the processing by the electronic control unit 2 is initiated, an engine operation region determination is initially made (step S100 in Fig. 2) .

That is, it is determined whether the engine 1 is in an operation region where the compressor surge occurs, in other words, in an operation region where the compressor 18 is operated in the surge region.

The determination on whether the compressor 18 is in the surge region can be made on the basis of a correlation between the intake air amount of the compressor 18 and a pressure ratio of the compressor 18, for example. Note that the above-described intake air amount of the compressor 18 is the intake air amount detected by the airflow sensor 21.

In addition, the above-described pressure ratio of the compressor 18 is a ratio between pressures on upstream and downstream sides the compressor 18. Estimated values of the pressure on the upstream side of the compressor 18 and the pressure on the downstream side of the compressor 18 are respectively calculated on the basis of a detection value of an atmospheric pressure sensor (not illustrated) and a detection value of the boost pressure sensor 22.

This correlation is usually determined on the basis of a specific specification of the compressor 18. Thus, it is preferred to store the correlation in an appropriate storage area of the electronic control unit 2 in advance and use the correlation for the determination on whether the operation region of the compressor 18 is in the surge region in step S100.

In this case, a map from which the determination on whether the operation region of the compressor 18 is the surge region can be read for any of various combinations of the intake air amount and the pressure ratio is preferably stored in an appropriate area of the electronic control unit 2 and used for the determination in step S100.

If it is determined that the operation region of the compressor 18 is in the surge region in step S100 (if YES), the processing proceeds to step S110, which will be described next.

On the other hand, if it is determined that the operation region of the compressor 18 is not in the surge region in step S100 (if NO), a series of the following processing does not have to be executed. Thus, the series of the processing is terminated, and the processing once returns to a main routine, which is not illustrated. Note that, after the processing returns to the main routine, the series of this processing is repeatedly executed at specified timing.

In step S110, a target pressure ratio is set.

The target pressure ratio is a ratio of a pressure on an inlet side of the variable turbine 17 to the detection value of the boost pressure sensor 22, and is expressed as P2/P1 when the detection value of the boost pressure sensor 22 (a detected pressure) is set as PI and the pressure on the inlet side of the variable turbine 17 is set as P2.

In particular, the target pressure ratio set in this step S110 is the target pressure ratio that is suited to avoidance of the compressor surge.

More specifically, as a method of setting such a target pressure ratio, a method of setting the target pressure ratio to a predetermined fixed value in accordance with the boost pressure at this time, a method of setting the target pressure ratio to an appropriate value by using a map, or the like can be adopted, for example.

As appropriate elements that are considered when the target pressure ratio is determined by using the fixed value or the map described above, the engine speed, the operating condition of the engine 1, and the like are preferred, for example.

Here, the operating condition of the engine 1 means a warm-up operating state, a regenerative mode of the diesel particulate filter (DPF), or the like, for example.

The target pressure ratio as the fixed value or a setting value in the map described above is preferably determined on the basis of a test result or a simulation result while the elements as described above are taken into consideration.

Next, a target turbine pressure is calculated (see step S120 in Fig. 2).

Here, the target turbine pressure is a target value of an exhaust pressure on an upstream side of the variable turbine 17, that is, more specifically, on the variable turbine 17 side from a connection point with the communication passage 14 in the exhaust pipe 13.

Such a target turbine pressure is calculated by multiplying an actual intake pressure (an actual boost pressure) of the engine 1, which is detected by the boost pressure sensor 22, by the target pressure ratio.

Next, pressure limit is applied to the target turbine pressure, which is calculated as described above (see step S130 in Fig. 2).

More specifically, in the case where the target turbine pressure calculated in step S120 exceeds a predetermined limit pressure, the limit pressure is set as the target turbine pressure. On the other hand, in the case where the target turbine pressure calculated in step S120 does not exceed the limit pressure, the target turbine pressure is used as is.

Next, a target turbine opening area is calculated (see step S140 in Fig. 2).

The target turbine opening area is an opening area that should be set for the exhaust flow passing through the variable turbine 17 so as to bring the pressure on the upstream side of the variable turbine 17 to the target turbine pressure that has been calculated (in step S130 in Fig. 2).

This target turbine opening area is calculated by the arithmetic expression that is acquired by replacing the variable turbine 17 with the physical model and mathematizing the physical model.

Such a physical model is based on the throttle expression.

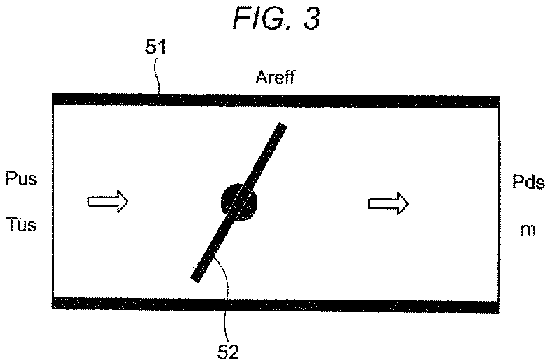

Fig. 3 is a schematic view for schematically illustrating a concept of the physical model of the variable turbine 17 on the basis of the throttle expression. A description will hereinafter be made on the calculation of the target turbine opening area based on the physical model with reference to Fig. 3.

In Fig. 3, a passage 51 corresponds to a portion of the variable turbine 17 from an inflow port to an outlet of the air, and a rotary member 52 in the passage 51 corresponds to a turbine blade of the variable turbine 17. Note that a motor referred to as a turbine actuator is usually used to cause rotation of the turbine blade of the variable turbine 17, for example. However, it may be configured to use a waste gate instead of the turbine actuator, and in this case, the rotary member 52 corresponds to a waste gate valve.

When a target turbine opening area Areff is calculated, an upstream pressure Pus, an upstream temperature Tus, a downstream pressure Pds, and an exhaust flow rate m are used as so-called calculation parameters.

Here, the upstream pressure Pus is the pressure on the inlet side of the variable turbine 17 and is the target turbine pressure, which is acquired by the above processing in step S130 in this example.

The exhaust flow rate m is calculated by using an arithmetic expression that is set to be able to calculate the exhaust flow rate m by considering the operating condition such as a fuel injection amount on the basis of a detection value of the airflow sensor 21.

The upstream temperature Tus is a temperature on the inlet side of the variable turbine 17.

In the embodiment of the present invention, an estimated value, which will be described next, is used as the upstream temperature Tus.

As one of conventional methods for controlling an operation of an exhaust gas recirculation device, a method for controlling the operation of the exhaust gas recirculation device on the basis of an arithmetic expression that is acquired by physically modeling an exhaust gas recirculation system is available. In the embodiment of the present invention, the upstream temperature Tus is calculated as the estimated value by using the arithmetic expression that is acquired by physically modeling this exhaust gas recirculation system, and this upstream temperature Tus as the estimated value is used for the calculation of the target turbine opening area Areff.

Note that the upstream temperature Tus does not always have to be limited to the above-described estimated value but, needless to say, may be an actually measured value detected by a sensor or the like.

The downstream pressure Pds is the pressure on the outlet side of the variable turbine 17.

Usually, as this downstream pressure Pds, the detection value of the atmospheric pressure sensor (not illustrated) that is provided in an automobile using the internal combustion engine is preferably used.

Note that a pressure distribution state of the exhaust pipe 13 portion is physically modeled, an estimated value of the downstream pressure Pds is calculated by an arithmetic expression acquired by the model, and such an estimated value is preferably used instead of the detection value of the atmospheric pressure sensor.

Next, a drive position of the turbine actuator is set such that the opening of the variable turbine 17 is set at the opening degree that corresponds to the target turbine opening area acquired in step S140 (see step S150 in Fig. 2).

As described above, a rotating position of the turbine blade (not illustrated) of the variable turbine 17, which corresponds to the rotary member 52 illustrated in Fig. 3, is varied by the turbine actuator (not illustrated).

Accordingly, in order to set the opening of the variable turbine 17 at the opening degree that corresponds to the target turbine opening area, the turbine actuator has to be driven in accordance with the target turbine opening area.

A correlation between the target turbine opening area and a signal (a drive position signal) that corresponds to the drive position of the turbine actuator and that should be received by the turbine actuator in accordance with this target turbine opening area is predetermined. For example, the target turbine opening area and the drive position signal are stored as a map in the appropriate storage area of the electronic control unit 2. Then, when the target turbine opening area is calculated as described above, the corresponding drive position signal is set.

The turbine actuator is driven in accordance with the drive position signal, which is set as described above, and the opening of the variable turbine 17 is set at the opening degree corresponding to the target turbine opening area, in other words, the surge prevention opening degree (see step S160 in Fig. 2).

Next, a description will be made on a change characteristic of the boost pressure at the time when the above-described boost pressure control processing in the embodiment of the present invention is executed by making a comparison with a similar change characteristic by a conventional boost pressure control device.

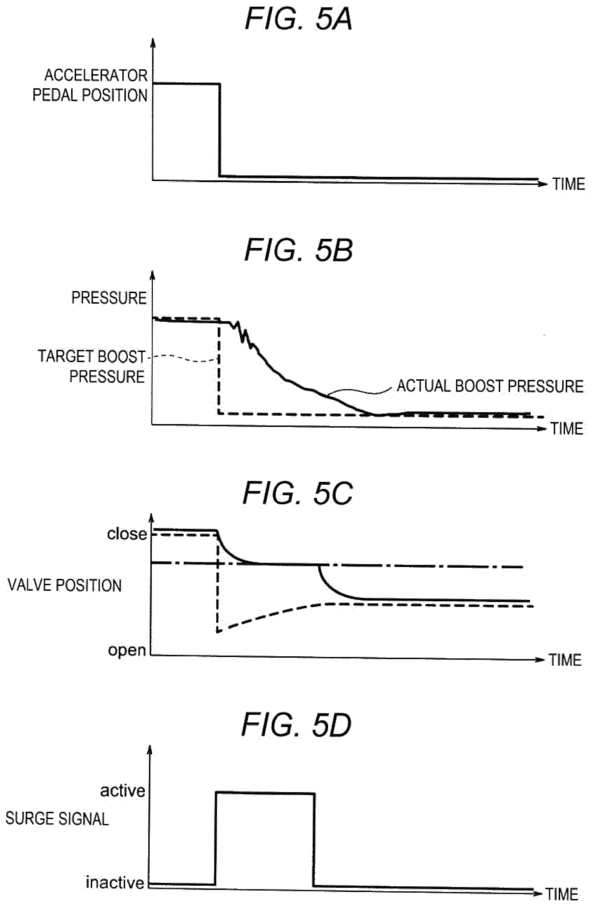

A description will first be made on the change characteristic of the boost pressure by the conventional boost pressure control device during deceleration of the vehicle with reference to characteristic charts illustrated in Fig. 5.

First, it is assumed that, in a state where the vehicle travels at a certain accelerator pedal position, an accelerator is released and the deceleration occurs at prescribed timing.

Fig. 5A is a timing chart schematically illustrating a change in the accelerator pedal position, and time t1 in Fig. 5A represents a time point at which the above-described deceleration occurs.

At the same time as the vehicle is brought into a decelerated state, a surge signal in a specified level corresponding to a logical value High is generated and remains on in a period when the compressor surge possibly occurs (see Fig. 5D).

This surge signal corresponding to the logical value High is output when specified surge occurrence determination processing is executed to determine presence or absence of the possible occurrence of the compressor surge and it is determined that the compressor surge possible occurs.

When a deceleration request is made through the release of the accelerator as described above, a target boost pressure is set to a low value that corresponds to the release of the accelerator (see a dashed characteristic line in Fig. 5B).

This target boost pressure is determined irrespective of the presence or absence of the occurrence of the compressor surge but on the basis of a change in the accelerator pedal position.

Meanwhile, due to an influence of the remaining boost pressure, the actual boost pressure is not immediately lowered even after the sudden deceleration as described above and is gradually lowered (see a solid characteristic line in Fig. 5B) .

Accordingly, in the case where the turbine opening degree is changed in accordance with the above-described target boost pressure, at the same time as the occurrence of the deceleration, the turbine opening degree is rapidly changed from a closed side to an open side in a manner to correspond to the above-described change in the target boost pressure (see a dashed characteristic line in Fig. 5C).

Such a rapid change in the turbine opening degree leads to the occurrence of the compressor surge. Thus, the conventional device executes the following operation control. While the surge signal remains on, the turbine opening degree is maintained at an opening degree near a surge avoidance opening degree that is calculated in advance (see a one-dot chain characteristic line in Fig. 5C). Then, after the surge signal turns off, the turbine opening degree returns to a normal turbine opening degree (see a solid characteristic line in Fig. 5C) .

In the conventional control as described above, the occurrence of the compressor surge is surely avoided by temporarily maintaining the turbine opening degree at the opening degree near the surge avoidance opening degree. However, when the surge signal turns off, the turbine opening degree immediately returns to the opening degree in the normal control. Accordingly, the turbine opening degree is not smoothly changed before and after turning off of the surge signal, and thus it cannot be said that such control is necessarily the desired boost pressure control.

Meanwhile, the change characteristic of the boost pressure by the boost pressure control processing in the embodiment of the present invention is as follows.

First, it is assumed that, in the state where the vehicle travels at the certain accelerator pedal position, the accelerator is released and the deceleration occurs at the prescribed timing.

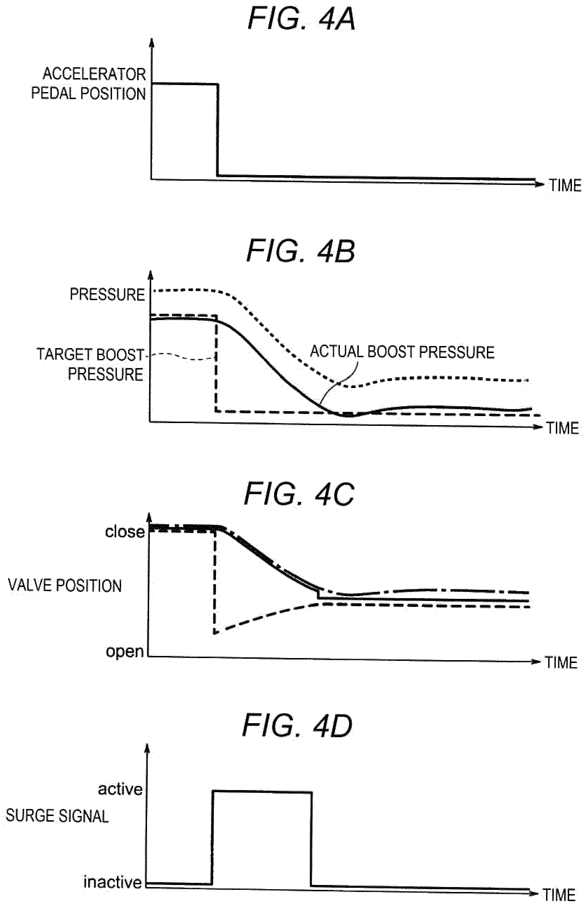

Fig. 4A is a timing chart schematically illustrating the change in the accelerator pedal position, and time t1 in Fig. 4A represents a time point at which the above-described deceleration occurs.

It is similar to the conventional device that, at the same time as the vehicle is brought into the decelerated state, the surge signal is generated and remains on in the period when the compressor surge possibly occurs (see Fig. 4D).

In the embodiment of the present invention, while the surge signal remains on, the turbine opening degree is set at the opening degree (the surge prevention opening degree) that corresponds to the target turbine opening area calculated by the arithmetic expression based on the physical model, which is based on the throttle expression (see steps S110 to S160 in Fig. 2 and a solid characteristic line in Fig. 4C).

This turbine opening degree does not exceed the surge avoidance opening degree (see a one-dot chain characteristic line in Fig. 4C), which is determined on the basis of the target turbine pressure (see step S120 in Fig. 2 and a dotted characteristic line in Fig. 4B), and is gradually increased to the open side in a manner to substantially follow the surge avoidance opening degree (see a solid characteristic line in Fig. 4C).

Accordingly, differing from the related art, the actual boost pressure is gradually lowered from a time point at which the surge signal is generated (see a solid characteristic line in Fig. 4B) and is eventually converged to the substantially same value as the conventional target boost pressure (see a dashed characteristic line in Fig. 4B).

Just as described, in the embodiment of the present invention, the target turbine opening area is gradually increased during the deceleration of the vehicle. Thus, a rapid fluctuation of the intake pressure of the compressor 18 is prevented, and the occurrence of the compressor surge is reliably avoided.

In particular, since the target turbine opening area is calculated by the arithmetic expression based on the physical model, the appropriate target turbine opening area that corresponds to an operating state of the vehicle is calculated on a moment-to-moment basis. Thus, the appropriate boost pressure control is executed while the occurrence of the compressor surge is reliably prevented.

Meanwhile, for example, in the conventional turbine opening degree and boost pressure control using the map, the occurrence of the compressor surge can be prevented by the suitable turbine opening degree and boost pressure control as long as the operating state of the vehicle and the like fall within a range that satisfies a condition stored in the map.

However, it is impossible to cover every conceivable condition of the boost pressure control in the map. Furthermore, as the range that can be covered by the map is expanded, time and effort required for tasks such as data acquisition and data setting are increased, which further leads to an increase in cost of the boost pressure control device.

In the boost pressure control processing in the embodiment of the present invention, as described above, the turbine opening degree that corresponds to the operating state of the vehicle is set by the real-time calculation based on the physical model, and the boost pressure is thereby controlled. Accordingly, the tasks such as acquisition and setting of the data stored in the map as in the related art are no longer necessary, and the appropriate boost pressure control can reliably be secured even in the range that is difficult to be covered by the conventional boost pressure control using the map.

The present invention can be applied to a supercharger for which it is desired to appropriately prevent the compressor surge in accordance with the operating condition of the vehicle without requiring the time and the effort for the tasks such as the data acquisition and the data setting in a manufacturing process.

## Claims

1. A boost pressure control method for a supercharger (16) that drives a turbine (13) by exhaust gas flowing through an exhaust passage (13) of an internal combustion engine and supercharges air flowing through an intake passage (12) to the internal combustion engine by a compressor (18) coupled to the turbine (17), the boost pressure control method comprising:
in the case where it is determined that the internal combustion engine is in an operation region to operate the compressor (18) in a surge region,
calculating a target turbine opening area (Areff) of the turbine (17) for preventing compressor surge by using an arithmetic expression that is acquired by replacing the turbine (17) with a physical model based on a throttle expression, by
setting a target pressure ratio in accordance with an actual boost pressure and calculating a target turbine pressure from said target pressure ratio and the actual boost pressure, the target pressure ratio being a ratio of a pressure on an inlet side of the turbine (17) to the actual boost pressure and being set to prevent the occurrence of the compressor surge, and by
using the target turbine pressure as a desired turbine pressure on the inlet side of the turbine (17) so as to calculate the target turbine opening area (Areff);
and setting an opening of the turbine (17) at an opening degree that corresponds to the target turbine opening area (Areff), so as to be able to prevent occurrence of the compressor surge in the compressor (18).

2. A boost pressure control device comprising an electronic control unit (2) configured to control a boost pressure of an internal combustion engine, the boost pressure being generated by a supercharger(16) that drives a turbine (17) by exhaust gas flowing through an exhaust passage (13) of the internal combustion engine and supercharges air flowing through an intake passage (12) to the internal combustion engine by a compressor (18) coupled to the turbine (17), wherein
the electronic control unit (2) is configured to:
calculate a target turbine opening area (Areff) of the turbine (17) for preventing compressor surge by using an arithmetic expression that is acquired by replacing the turbine (17) with a physical model based on a throttle expression; by
setting a target pressure ratio in accordance with an actual boost pressure and calculating a target turbine pressure from said target pressure ratio and the actual boost pressure, the target pressure ratio being a ratio of a pressure on an inlet side of the turbine (17) to the actual boost pressure and being set to prevent occurrence of the compressor surge; and by
using the target turbine pressure as a desired turbine pressure on the inlet side of the turbine (17) so as to calculate the target turbine opening area (Areff);
and be able to set an opening of the turbine (17) at an opening degree that corresponds to the target turbine opening area (Areff)
in the case where it is determined that the internal combustion engine is in an operation region to operate the compressor in a surge region.

## Patentansprüche

1. Ladedruckregelungsverfahren für einen Vorverdichter (16), der eine Turbine (13) antreibt, indem Abgas durch einen Abgasdurchgang (13) eines Verbrennungsmotors strömt, und durch einen Einlassdurchgang (12) zum Verbrennungsmotor strömende Luft durch einen mit der Turbine (17) gekoppelten Verdichter (18) verdichtet, wobei das Ladedruckregelverfahren Folgendes umfasst: wenn bestimmt wird, dass sich der Verbrennungsmotor in einem Betriebsbereich befindet, um den Verdichter (18) in einem Pumpbereich zu betreiben,
Berechnen einer Sollturbinenöffnungsfläche (Areff) der Turbine (17), um ein Verdichterpumpen zu verhindern, indem ein arithmetischer Ausdruck verwendet wird, der erhalten wird, indem die Turbine (17) auf Grundlage eines Drosselausdrucks gegen ein physisches Modell ausgetauscht wird, indem
ein Solldruckverhältnis entsprechend eines Istladedrucks eingestellt wird und ein Sollturbinendruck aus dem Solldruckverhältnis und dem Istladedruck berechnet wird, wobei das
Solldruckverhältnis ein Verhältnis eines Drucks auf einer Einlassseite der Turbine (17) zum Istladedruck ist und eingestellt wird, um das Auftreten von Verdichterpumpen zu verhindern, und indem der Sollturbinendruck als gewünschter Turbinendruck auf der Einlassseite der Turbine (17) verwendet wird, um die Sollturbinenöffnungsfläche (Areff) zu berechnen; und Einstellen einer Öffnung der Turbine (17) in einem Öffnungsgrad, der der Sollturbinenöffnungsfläche (Areff) entspricht, um das Auftreten von Verdichterpumpen im Verdichter (18) zu verhindern.

2. Ladedruckregelungsvorrichtung, die eine elektronische Steuereinheit (2) umfasst, die dazu ausgelegt ist, einen Ladedruck eines Verbrennungsmotors zu steuern, wobei der Ladedruck von einem Vorverdichter (16) erzeugt wird, der eine Turbine (17) antreibt, indem Abgas durch einen Abgasdurchgang (13) des Verbrennungsmotors strömt, und durch einen Einlassdurchgang (12) zum Verbrennungsmotor strömende Luft durch einen mit der Turbine (17) gekoppelten Verdichter (18) verdichtet, wobei
die elektronische Steuereinheit (2) zu Folgendem ausgelegt ist: Berechnen einer Sollturbinenöffnungsfläche (Areff) der Turbine (17), um ein Verdichterpumpen zu verhindern, indem ein arithmetischer Ausdruck verwendet wird, der erhalten wird, indem die Turbine (17) auf Grundlage eines Drosselausdrucks gegen ein physisches Modell ausgetauscht wird; indem
ein Solldruckverhältnis entsprechend eines Istladedrucks eingestellt wird und ein Sollturbinendruck aus dem Solldruckverhältnis und dem Istladedruck berechnet wird, wobei das
Solldruckverhältnis ein Verhältnis eines Drucks auf einer Einlassseite der Turbine (17) zum Istladedruck ist und eingestellt wird, um das Auftreten von Verdichterpumpen zu verhindern; und indem der Sollturbinendruck als gewünschter Turbinendruck auf der Einlassseite der Turbine (17) verwendet wird, um die Sollturbinenöffnungsfläche (Areff) zu berechnen; und eine Öffnung der Turbine (17) in einem Öffnungsgrad einstellen zu können, der einer Sollturbinenöffnungsfläche (Areff) entspricht,
wenn bestimmt wird, dass sich der Verbrennungsmotor in einem Betriebsbereich befindet, um den Verdichter in einem Pumpbereich zu betreiben.

## Revendications

1. Procédé de commande de pression de suralimentation pour un compresseur d'alimentation (16) qui entraîne une turbine (13) par les gaz d'échappement s'écoulant à travers un passage d'échappement (13) d'un moteur à combustion interne et suralimente l'air s'écoulant à travers un passage d'admission (12) vers le moteur à combustion interne par un compresseur (18) accouplé à la turbine (17), le procédé de commande de pression de suralimentation comprenant les étapes consistant à :
dans le cas où il est déterminé que le moteur à combustion interne se trouve dans une région de fonctionnement pour faire fonctionner le compresseur (18) dans une région de surpression,
calculer une surface d'ouverture de turbine cible (Areff) de la turbine (17) pour empêcher le pompage du compresseur à l'aide d'une expression arithmétique qui est acquise en remplaçant la turbine (17) par un modèle physique basé sur une expression d'étranglement, en fixant un rapport de pression cible en fonction d'une pression de suralimentation réelle et calculant une pression de turbine cible à partir dudit rapport de pression cible et de la pression de suralimentation réelle, le rapport de pression cible étant un rapport entre une pression sur un côté entrée de la turbine (17) et la pression de suralimentation réelle et étant fixé pour empêcher la survenue du pompage du compresseur, et en
utilisant la pression de turbine cible comme pression de turbine souhaitée sur le côté entrée de la turbine (17) de sorte à calculer la surface d'ouverture de turbine cible (Areff) ;
et régler une ouverture de la turbine (17) à un degré d'ouverture qui correspond à la surface d'ouverture de turbine cible (Areff), de sorte à pouvoir empêcher la survenue du pompage du compresseur dans le compresseur (18) .

2. Dispositif de commande de pression de suralimentation comprenant une unité de commande électronique (2) conçue pour commander une pression de suralimentation d'un moteur à combustion interne, la pression de suralimentation étant générée par un compresseur d'alimentation (16) qui entraîne une turbine (17) par les gaz d'échappement s'écoulant à travers un passage d'échappement (13) du moteur à combustion interne et suralimente l'air s'écoulant à travers un passage d'admission (12) vers le moteur à combustion interne par un compresseur (18) accouplé à la turbine (17),
l'unité de commande électronique (2) étant conçue pour :
calculer une surface d'ouverture de turbine cible (Areff) de la turbine (17) pour empêcher le pompage du compresseur à l'aide d'une expression arithmétique qui est acquise en remplaçant la turbine (17) par un modèle physique basé sur une expression d'étranglement ; en fixant un rapport de pression cible en fonction d'une pression de suralimentation réelle et calculant une pression de turbine cible à partir dudit rapport de pression cible et de la pression de suralimentation réelle, le rapport de pression cible étant un rapport entre une pression sur un côté entrée de la turbine (17) et la pression de suralimentation réelle et étant fixé pour empêcher la survenue du pompage du compresseur, et en
utilisant la pression de turbine cible comme pression de turbine souhaitée sur le côté entrée de la turbine (17) de sorte à calculer la surface d'ouverture de turbine cible (Areff) ;
et pouvoir régler une ouverture de la turbine (17) à un degré d'ouverture qui correspond à la surface d'ouverture de turbine cible (Areff)
dans le cas où il est déterminé que le moteur à combustion interne se trouve dans une région de fonctionnement pour faire fonctionner le compresseur dans une région de surpression.
